Europäisches Patentamt

European Patent Office

Office européen des brevets

(11) Publication number: **0 191 649 B1**

## EUROPEAN PATENT SPECIFICATION

(45) Date of publication of patent specification: **19.05.93**   (51) Int. Cl.<sup>5</sup>: **C08J 3/24**, C08G 59/18, C09J 201/00

(21) Application number: **86301051.8**

(22) Date of filing: **14.02.86**

(54) Heat curable composition.

(30) Priority: **15.02.85 GB 8503882**

(43) Date of publication of application:
**20.08.86 Bulletin 86/34**

(45) Publication of the grant of the patent:
**19.05.93 Bulletin 93/20**

(84) Designated Contracting States:
**AT BE CH DE FR GB IT LI NL SE**

(56) References cited:
**EP-A- 0 074 218**
**EP-A- 0 117 738**
**GB-A- 1 033 514**
**GB-A- 1 104 274**

(73) Proprietor: **RAYCHEM LIMITED**
**Rolls House 7, Rolls Buildings Fetter Lane**
**London, EC4 1NL(GB)**

(72) Inventor: **Hadjiandreou, Pavlos**
**Bat. B/58A2**
**Boumerdes(DZ)**
Inventor: **Acott, Kevin Peter**
**10 Cairndow Way Oueensfield**
**Swindon Wiltshire(GB)**
Inventor: **Gentilcore, Giovanni**
**168 Manchester Road**
**Swindon Wiltshire(GB)**

(74) Representative: **Jay, Anthony William et al**
**Raychem Limited Intellectual Property Law**
**Department Faraday Road**
**Dorcan Swindon Wiltshire (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3. 10/3.6/3.3. 1)

**Description**

This invention relates to heat – curable compositions of the kind which cure by reaction of a first reactive component with a second reactive component when heated to the curing temperature. Such compositions may be useful, for example, as curable adhesives.

Ready – mixed heat – curable adhesives which cure by reaction of two components generally suffer from the disadvantage that either their shelf life is good but their eventual cure rate is slow as a result of measures taken to prevent premature curing, or their cure is good but their shelf life inadequate due to premature curing.

British Patent Specification No. 2104800 describes an ingenious solution to this problem, wherein a mixture of separate powders of the reactive components, which mixture has excellent shelf life, provides surprisingly good cure when a heat – shrinkable polymer sleeve is shrunk onto the mixture at or above the curing temperature. However, the coherent uncured adhesive layers which may be formed for application to the sleeve by compressing the mixture, while retaining its advantageous balance of shelf life and cure, tend to be undesirably brittle and are easily cracked, broken and lost in use. The described addition of unspecified amounts of pressure – sensitive adhesive or mastic of course inhibits the cure, while the use of more flexible reactants tends to result in premature cure.

The present invention improves the flexibility and handling character of such adhesive layers in the uncured state while maintaining an advantageous balance of shelf life and curing properties.

EP – A – 0117738 does not relate to mixtures of two reactive particles at all. It is concerned with sheets or tapes having extruded regions containing a curable material adjacent to extruded regions containing a curing agent, arranged for example in stripes or checks. Such a product thus has a very different structure, produces a very different level of cure, and is used for very different purposes, from the intimately mixed fine particles of the present invention.

The invention provides a heat – curable composition comprising a substantially incohesive mixture of substantially solid particles which mixture includes substantially solid particles of a first reactive component and separate substantially solid particles of at least a second reactive component capable of reacting with the first component to effect curing when the composition is heated to the curing temperature, wherein at least a majority of the particles carry individual portions of compatible (as hereinafter defined) binder, the total weight of binder being within the range from 0.1% to 30% of the total weight of the composition, provided that, if the viscosity of the binder per se is not more than 20,000 centipoises at 25˚C then (a) the combined weight of binder is not more than 15% of the composition and (b) at least 10% by weight of the total discrete particles have a deformability (as hereinafter defined) of at least 50%, and wherein the binder is capable of binding the composition together to form a self – supporting room – temperature – flexible article when the composition is compressed under conditions which allow at least the first reactive component and the second reactive component to remain in particulate form.

This invention is thus based upon the unexpected discovery that pre – coating of the reactant particles with less than 30% or 25%, preferably not more than 20%, more preferably not more than 10%, and most preferably not more than 5%, binder, by weight, results in a composition which can be rendered cohesive to form a self – supporting flexible and robust article, such as a sheet strip, rod, tube, or other form of the latent curing adhesive with an advantageous balance of properties as aforesaid. The microstructure of such adhesives after processing but before cure is predominantly heterogeneouS, the particles retain their individual identity and do not substantially coalesce.

The composition may be rendered cohesive to form the desired article by various means, for example by compression at a temperature below the softening point of the reactive components, preferably in the substantial absence of any solvent for the binder or the reactive components. Forming techniques such as rolling, extrusion, or moulding, at a temperature below the melting point of the reactive components, may be used. Preferably the reactive component particles are bound together substantially only by the said binder.

Other useful adhesive articles may be formed from the powder composition, e.g. substantially rigid rings or discs.

The binder may be applied to a mixture of the reactive powders, or separately to the respective powders which are subsequently mixed together.

The article is obtained by two ambient temperature processing steps. Firstly the binder is distributed around the powders in a high speed, low shear mixer. Secondly, the powder/binder mixture is formed into a sheet or other shape (e.g. adhesive ring) by cold pressing or cold milling. It is evident that much lower pressures are needed to form this sheet than in previously described techniques thus allowing greater range of sheet thickness and more varied preform shapes to be produced.

Preferably the binder per se is flowable under substantially solvent – free processing conditions at temperatures which do not cause prereaction of powders and which do not significantly render flowable any reactive components particles, and has been spread over at least some of the individual particle surfaces under such conditions, preferably by application to the mixture of the particles of the first and second reactive components.

Thus, the invention provides a method of making the incohesive mixture of binder – coated particles, comprising dispersing the binder into a mass of particles of the first reactive component and/or particles of the second reactive component under conditions under which the reactive component particles are substantially non – flowable and the binder is flowable to coat the individual particle surfaces. Preferably, the binder is dispersed into the particles under substantially solvent – free conditions. It may also be preferred that the binder is applied to the particles of the first reactive component separately from the particles of the second component and/or is applied to the particles of the second reactive component separately from the particles of the first reactive component, and the respective particles of the first and second reactive components are subsequently mixed together.

"Substantially solid" particles, as referred to herein means particles which are substantially non – flowable in the composition when stored at room temperature and excludes liquid – filled microcapsules. "Compatible binder" means binder material which (1) does not significantly cure the composition or render flowable any reactive component thereof at storage temperatures below the intended maximum for the composition, and (2) does not significantly inhibit curing at the intended curing temperature.

The "separate" particles, e.g. of the reactive components, are preferably separate in the sense that the particles of one kind are freely movable relative to the particles of the other kind(s) in the mixture, for example when the mixture is formed by mixing together two separate powders of the first and second reactants respectively.

An important aspect of the present invention thus relates to the use of low levels of specified binders which are processed without the use of solvents to give latent curing adhesive materials in the form of self – supporting flexible sheets or pre – moulded shapes or extruded profiles. The use of binders allows processing of materials having good flexibility and a relatively high resistance to mechanical abuse in the uncured state whilst maintaining the advantageous balance of shelf life and curing properties. Preferably the reactive components and binder comprise at least 70%, more preferably at least 75%, most preferably at least 80%, by weight, of the composition.

Preferably the reactive components are substantially non flowable under storage and processing temperatures. The powders are treated by mixing with a binder using a high speed low shear mixer. After treatment the powders carry individual portions of the binder, the total weight of the binder being within the range of from 0.1% to 30% of the total weight of the composition. Preferably, the total weight of the binder is not more than 15%, more preferably not more than 10%, most preferably not more than 5%, of the composition, and is not less than 1%, more preferably not less than 2%, of the composition.

The nature and level of the binder used are dependent upon the deformability of at least one of the powdered components. If the viscosity of the binder is not more than 20000 centipoise, preferably not more than 15,000 centipoise, at 25ºC then (a) the combined weight of binder is preferably not more than 15%, preferably not more than 10%, most preferably not more than 5% of the composition and (b) at least 10%, preferably at least 15%, more preferably at least 25%, by weight, of the powders have a deformability (as hereinafter defined) of at least 50%. When the binder (1) does not significantly cure the composition or render flowable any reactive components at the said storage temperatures, and (2) does not significantly inhibit curing at the intended cure temperature, then a self – supporting flexible curable sheet may be formed when the composition is compressed under conditions which allow the binder on the particle surfaces to consolidate the sheet but retain the first reactive component and the second reactive component in particulate form although deformable particles may be changed to an ellipsoid or other shape under said conditions.

If the viscosity of the binder is greater than 15,000, preferably greater than 20,000 or 35,000, centipoise at 25ºCthen similar self – supporting flexible articles may be formed with substantially no particles of more than 50% deformability providing the combined weight of the binder is not more than 25% and preferably more than 15% of the composition, although less than 15% binder may be used.

## DETAILED DESCRIPTION OF THE INVENTION

Preferably the binder is flowable under substantially solvent free processing conditions which do not render flowable any reactive component particles. The binder is spread over at least some of the individual particle surfaces using a high speed, low shear mixer. At this stage the adhesive remains as a free flowing powder and is formed into its given shape by subsequent ambient temperature processing. For example, by passing the powder – binder mix through a two – roll mill a robust, flexible self – supporting sheet is formed. By compressing the mix on a high pressure tablet press, pre – moulded shapes can be readily formed. By passing the mixture through an extruder barrel various extrudate profiles, including tubes, can be readily formed. The cohesive article may, for example, be flexible preferably at room temperature to the extent that it can be wrapped without clearly observable cracking around a circular body of diameter 100 times, preferably 50 times, more preferably 25 times, the maximum thickness of the article in the sense which would lie perpendicular to the circular body surface when the article is wrapped once around. In some cases, the article can be wrapped without clearly observable cracking around a circular body of diameter 10 times, preferably 5 times, the maximum thickness of the article in the sense which would lie perpendicular to the circular body surface when the article is wrapped once round it. Preferably such an article has a thickness of from 0.2 to 5, preferably 1 to 3, millimetres in the said perpendicular sense.

BINDER MATERIALS

A wide range of materials are suitable for use as binders providing they are (1) substantially liquid at processing temperatures, preferably having a viscosity at 25° of not more than 600,000 centipoises, more preferably not more than 200,000 centipoises, most preferably not more than 100,000 centipoises, and especially not more than 20,000 or 15,000 centipoises; (2) remain substantially non – volatile under storage and processing conditions and (3) do not solubilise the reactive powder components of the adhesive. Liquid polymers and oligomers with viscosities from 300 to 1,000,000 centipoise, as measured at 25°C, can be used as binders. These liquids can be broadly classified as polyalkenyl anhydrides, copolymers of alkenes and ethylenically unsaturated acids or nitriles, polyglycols, polyols, polysiloxanes, polybutadienes, polybutadiene/acrylonitrile copolymers, polyisobutenes, polyesters, aliphatic (preferably 14 or more carbon atoms) hydrocarbons, which are substantially non – volatile at the relevant storage temperatures, acrylic adipates, arylphosphates, orthophosphates, , palmitates, sebacates, sterates, acrylated oligomers and methacrylated oligomers. Other examples of binder materials will be apparent to those familiar with liquid polymers. Of use for powdered formulations where at least 10% of the powders are deformable are binders of viscosity less than 15,000 centipoise especially not more than 10,000 centipoise, preferably not more than 5000 centipoises, more preferably not more than 1500 centipoises, at 25°C. Of particular use are polypropylene glycols and polybutadienes.

Of use as binders for powder formulations containing no deformable powders are liquid polymers with viscosities greater than 10,000 centipoise at 25°C. Particularly useful are the butadiene acrylonitrile copolymers and the polybutadienes.

Binders which are substantially solid at room temperature but become liquid or highly deformable under conditions used to apply them to the particles (eg. the binder is flowable at 250°C) are also useful; aliphatic hydrocarbons such as nonodecane can be used as a binder above its melt point (33ºC) but below the softening point of the reactive resin components.

Soft deformable solid polymeric resin powders may also be used as binders providing the processing conditions cause such powders to coalesce and bind substantially solid powders which are not deformed during processing.

The binder may be capable of reacting with either or both of the reactive components when the composition is heated to the curing temperature.

The composition may include particles of a substantially non – reactive component having a defor – mability of at least 50% to assist in producing a coherent article.

POWDERED MATERIALS

The powders which can be used are solid resins at room temperature and remain solid during processing and storage. The powders can be substantially solid particles of hard brittle polymers or oligomers, having glass transition temperatures above processing and storage conditions, or they can be substantially solid deformable particles of polymers having a melting point above the storage and the processing temperature but having a glass transition temperature below this temperature. The deformable substantially solid particles having at least 50% deformability are defined as those which in disc form, after compression by a force of 2000 Newtons per square millimetres, remain deformed by at least 1.5 times their original diameter. The deformable powder may not necessarily be a reactive powder and may be inert towards the other powders.

Powders which are usable in this invention can be classified as powders from reactive resins (the "first reactive component"), powders of suitable curing agents (the "second reactive component") and powders which are substantially inert towards the curing components.

REACTIVE POWDERS

The substantially solid reactive particles of the "first reactive component" can be from epoxide resins, phenolic resins and acrylic resins.

Solid epoxide resins of use in the invention include: – diglycidyl ethers of bisphenol A, diglycidyl ethers of bisphenol F, polyglycidyl ethers of ortho – cresol – formaldehyde novalacs, polyglycidyl ethers of phenol formaldehyde novalacs, triglycidyisocyanurates, copolymers of bisphenyl A and epichlorolydrin (Phenoxy) and tetrafunctional polyglycidyl ethers of tetraphenylene ethane. Other usable reactive powders are acrylic resins, such as polybutyl methacrylate and acrylic acid adducts of solid diglycidyl ethers of bisphenyl A, and phenolic resins.

CURING AGENT POWDERS

The substantially solid particles of the curing agent "second reactive component" for the aforemen – tioned resins are predominantly amine functional resins which may be brittle or deformable. Other resins such as anhydride resins and carboxylic functional resins can be used as curing agents.

The solid brittle resins include crystalline materials such as dicyandiamide, imidazoles and substituted imidazoles, cationic salts and amine adducts of solid diglycidyl ethers of bisphenol A.

The deformable curing agents resins are predominantly polyamide resins such as the dimer acid fatty polyamides. Of particular interest are deformable resins having amine valves greater than 10mg KOH per gram of resin. Blends of such low reactivity polyamides and liquid high reactivity polyamides or other amine functional resins can be prepared to achieve these properties.

Thus, the second reactive component may for example be a thermoplastic polyamide , a thermoplastic copolymer of an alkene with an ethylenically unsaturated ester of an alkanol and a carboxylic acid, or a thermoplastic copolymer of an alkene with an ethylenically unsaturated acid or nitrile, or an amide adduct of a solid epoxy resin.

INERT POWDERS

Inert resins having little or no reactivity towards the reactive powders and their curing agents can be used to enhance processing capabilities, improve the cured resins properties and to reduce costs. Useful in this respect are powdered rubbers such as solid acrylonitrile/ polybutadine copolymers, powders of vinyl acetate ethylene copolymers and powders of chlorinated polyethylene.

The invention includes the incohesive compositions, or preferably the self – supporting articles made therefrom, when carried on a dimensionally heat – recoverable article so as to lie, in use, between the recoverable article and an object about which the article is to be recovered in use. The invention also naturally includes the compositions and articles described above which have been cured.

The following examples illustrate the invention, all parts expressed therein being by weight.

EXAMPLE 1

Example 1 illustrates the use of a liquid binder to form a self supporting cohesive sheet, 20 parts of a cryogenically ground dimerised fatty acid reactive polyamide sold under the trade name Henkel Macromelt 6071, 50 parts of a powdered epoxy resin of the diglycidyl ether of bisphenyl A type sold under the trade name DOW DER 662 and 20 parts of a powdered ethylene diamine adduct of the diglycidyl ether of bisphenyl A sold under the trade name Anchor EDA 870 were placed in a high speed low shear mixer with 7 parts of a polypropylene binder sold under the trade name DOW PPG 4000. The ingredients were mixed at room temperature using a drive speed of 2,000 RPM for 2 minutes on a Papenmier high speed low shear 5kg mixer. The mixture was then taken and passed between the nip rolls at room temperature on a Carter 45cm (18 inch) 2 roll mill. The nip roll gap on the mill can be altered to control the final thickness of the adhesive material. Sheets of such adhesive were used to form lap shear bonds and cured for 30 minutes 120˚C to give lap shear strengths of 2.8 MPa (400 psi) at 80˚C.

This sheet adhesive was laminated to a heat – shrinkable backing and shrunk around a constant temperature oil pipe of 5 cm (2 inches) Diameter, running at 80˚C. After 24 hours the pipe was subjected

EP 0 191 649 B1

to ASTM G42 cathodic disbonding test at 80˚C and examined after 30 days under such conditions, revealing only a 10 millimetres disbondment radius.

Examples 2 to 9, as shown in table A, illustrate the use of binders under 5,000 centipoise to form flexible self supporting sheets demonstrating the effects of deformable polymer content and deformability on ease of processing and sheet flexibility.

Examples 10 to 22, as shown in table B, ilustrates the effects on binder viscosities on formulations containing 50 parts deformable powder and 0 parts deformable powder.

Examples 23 to 34, as shown in table C, illustrates the ability to make self supporting adhesive sheets with a wide range of reactive resins and cure agents.

Examples 35 to 37, as shown in table D, illustrate the use of inert resins for sheet manufacture.

Examples 38 to 42, as shown in table E, illustate formulation which can be used to prepare preforms such as adhesive rings. These formulations were formed into adhesive rings of 9 mm external diameter and 6 mm internal diameter, thickness of 5 mm, on a Manesty F3 tabletting machine. Under the high compression forces used during processing the solid binders behave as a liquid and bind the hard powders of epoxy resin and cure agent together to give a more robust and handleable ring. For example formulation 42 (no binder) shatters at a drop height of 200 mm, where as formulation 40 (binder) does not break at a drop height of 600 mm.

Example 41 was cured for 1 hour at 120˚C to give a lap shear strength of greater than 7 MPa (1,000 psi) at 100˚C.

Example 40 was cured under a heat−shrink article on a 6 mm diameter pipe coupling to give a pressure retention of 21 MPa (3,000 psi) at 150˚C.

EP 0 191 649 B1

## T A B L E   A

| | 2 | 3 | 4 | 5 | 6 | 7 | 8 | 9 |
|---|---|---|---|---|---|---|---|---|
| **HARD RESINS** | | | | | | | | |
| EPOXY DOW DER 662 | 50 | 50 | 50 | 50 | 50 | 90 | 75 | 25 |
| **DEFORMABLE RESINS** | | | | | | | | |
| **Polyamides:-** | | | | | | | | |
| MACROMELT 6071 | 50 | 50 | | | | | | |
| MACROMELT 6071)Blend VERSAMID 140) | | | 50 | | | 10 | 25 | 75 |
| MACROMELT 6301 | | | | 50 | | | | |
| **EVA** | | | | | | | | |
| DU PONT CXA 2002 | | | | | 50 | | | |
| **BINDER** | | | | | | | | |
| DOW PPG 4000 | 0 | 5 | 5 | 5 | 5 | 5 | 5 | 5 |
| DEFORMABILITY RATIO* | 1.9 | 1.9 | 3.6 | 1.3 | 1.4 | 3.6 | 3.6 | 3.6 |
| NO PASSES TO FORM SHEET ** | 7 | 2 | 1 | X | X | 3 | 2 | 1 |
| FLEXIBILITY OF SHEET *** | 10 | 10 | 7.5 | X | X | 20 | 10 | 5 |

X=DOES NOT FORM SHEET

\*     Change in diameter of resin discs after compression under a load of 2000 Newtons per square millimetre
\*\*    Passes on 18 inch Carter Mill
\*\*\*   Diameter of Mandrel trough which sheet can be bent without cracking per unit thickness of adhesive

7

EP 0 191 649 B1

## TABLE  B

| | 10 | 11 | 12 | 13 | 14 | 15 | 16 | 17 | 18 | 19 | 20 | 21 | 22 |
|---|---|---|---|---|---|---|---|---|---|---|---|---|---|
| **HARD RESINS** | | | | | | | | | | | | | |
| EPOXY DOW DER 662 | 50 | 50 | 50 | 50 | 50 | 50 | 50 | 50 | 50 | 50 | 50 | 50 | 50 |
| CURE AGENT ANCHOR EDA 870 | | | | | | 50 | 50 | 50 | 50 | 50 | 50 | 50 | 50 |
| **DEFORMABLE RESINS** | | | | | | | | | | | | | |
| MACROMELT 6071 | 50 | 50 | 50 | 50 | 50 | | | | | | | | |
| **BINDER** | | | | | | | | | | | | | |
| DOW PPG 4,000 | 5 | | | | | 5 | 10 | 15 | | | | | |
| REVERTEX N4 5,000 | | 5 | | | | | | | 5 | | | | |
| REVERTEX LX 16 | | | 5 | | | | | | | 5 | | | |
| BF GOODRICH HYCAR 1300 x 9 | | | | 5 | | | | | | | 5 | 10 | 15 |
| NONODECANE | | | | | 5 | | | | | | | | |
| BINDER VISCOSITY* (centipoise at 25°C) | 1114 | 4000 | 15,000 | 160,000 | SOLID | 1114 | 1114 | 1114 | 4,000 | 15,000 | 160,000 | 160,000 | 160,000 |
| Passes to form Sheet** | 2 | 2 | 3 | 3 | 2 | X | X | X | X | | 5 | 2 | 2 |
| Flexibility of Sheet*** | 10 | 10 | 10 | 10 | 10 | – | – | – | – | – | 20 | 5 | 5 |

\*    Change in diameter of resin discs after compression under a load of 2000 Newtons per square millimetre  
\*\*    Passes on 18 inch Carter Mill  
\*\*\*    Diameter of Mandrel trough which sheet can be bent without cracking per unit thickness of adhesive

EP 0 191 649 B1

T A B L E   C

| RESINS | 23 | 24 | 25 | 26 | 27 | 28 | 29 | 30 | 31 | 32 | 33 | 34 |
|---|---|---|---|---|---|---|---|---|---|---|---|---|
| DGEBA (EPOXY) | | | | | | | | | | | | |
| (DOW DER 662) | 50 | 25 | 25 | | 25 | 25 | 65 | 65 | 90 | 76 | 85 | 58 |
| Epoxy Cresole Novalak (Ciba Giegy ECN 1280) | | 25 | | | | | | | | | | |
| Triglycidyl Isocyanurate (Ciba Giegy PT 810) | | | 25 | | | | | | | | | |
| Acrylic acid adduct of DGEBA (Ciba Giegy 6150 Epoxy acrylate) | | | | 50 | | | | | | | | |
| Polybutyl Methacrylate | | | | | 25 | | | | | | | |
| Bisphenyl A epichlorohydrin Copolymer (Union Carbide Phenoxy PK HJ) | | | | | | 25 | | | | | | |
| Polyamide (Henkel Macromelt 6071) | 50 | 50 | 50 | 50 | 50 | 50 | | | | | 5 | |
| Styrene Maleic Anhidride | | | | | | | 25 | | | | | |
| Deimethyl amino pydrine | | | | | | | 5 | 5 | | | | |
| Maleic Anhidride | | | | | | | 25 | | | | | |
| Dicyandiamide | | | | | | | | | | 3 | 5 | |
| MELT BLENDS:- Dicyandiamide (2)   ) Polyamide (Henkel 6071) (5)) | | | | | | | | | 14 | | | |
| Nickle imidazole sulphate (16)) Polyamide (Henkel 6071) (44)   ) | | | | | | | | | | 11 | | 45 |
| Metaphenylene diamine (75)   ) Polyamide (Henkel 6071) (25)) | | | | | | | | | | | | |

9

BINDERS

| | C1 | C2 | C3 | C4 | C5 | C6 | C7 | C8 | C9 | C10 | C11 | C12 |
|---|---|---|---|---|---|---|---|---|---|---|---|---|
| Polypropylene glycol (DOW PPG 4,000) | 5 | 5 | 5 | 5 | 5 | 5 | | | 10 | 10 | | |
| Acrylonitrile butadiene copolymer (BF Goodrich CTBN 1300 x 9) | | | | | | | 5 | 5 | | | 5 | 5 |
| PASSES TO FORM SHEET** | 2 | 2 | 2 | 2 | 2 | 2 | 5 | 5 | 3 | 3 | 3 | 3 |
| FLEXIBILITY OF SHEET*** | 10 | 10 | 10 | 10 | 10 | 10 | 20 | 20 | 10 | 10 | 10 | 10 |

|                                                      | 35  | 36  | 37  |
|------------------------------------------------------|-----|-----|-----|
| HARD POWDERS                                         |     |     |     |
| EPOXY RESINS (DOW DER 662)                           | 50  | 50  | 50  |
| CURE AGENT (ANCHOR EPN 870) EDA                      | 20  | 20  | 20  |
| DEFORMABLE RESINS POWDERS                            |     |     |     |
| POLYAMIDE (HENKEL MACROMELT 6071)                    | 25  | 25  | 25  |
| VINYL ACETATE ETHYLENE COPOLYMER (DU PONT VAE 711)   | 25  |     |     |
| ACRYLONITRILE – BUTADINE COPOLYMER (POLYMER KRYNUK 1411) |  | 25  |     |
| CHLORINATED POLYETHYLENE (BAYER CPE631)              |     |     | 25  |
| BINDER                                               |     |     |     |
| POLYPROPYLENE GLYCOL (DOW PP9 4,000)                 | 7   | 7   | 7   |
| PASSES TO FORM SHEET**                               | 5   | 3   | 5   |
| FLEXIBILITY OF SHEET***                              | 5   | 5   | 10  |

**   Passes on 18 inch Carter Mill
*** Diameter of Mandrel trough which sheet can be bent without cracking per unit thickness of adhesive

T A B L E   E

| | 38 | 39 | 40 | 41 | 42 |
|---|---|---|---|---|---|
| EPOXY DOW DER 662 | 90 | 47.5 | 90 | 85 | 95 |
| DICYAN DIAMIDE | 4 | | 4 | 4 | 4 |
| NICKLE IMIDAZOLE SULPHATE | 1 | | 1 | 1 | 1 |
| ANCHOR ADDUCT EDA 870 | | 47.5 | | | |
| BINDERS<br>Polybutadiene<br>BF Goodrich<br>CTBN 1300 x 9 | 5 | | | | |
| POLYAMIDE<br>HENKEL 6071 | | 5 | 5 | 10 | |

## Claims

1. A heat‒curable composition comprising a substantially incohesive mixture of substantially solid particles which mixture includes substantially solid particles of a first reactive component and separate substantially solid particles of at least a second reactive component capable of reacting with the first component to effect curing when the composition is heated to the curing temperature, wherein at least a majority of the particles carry individual portions of compatible (as hereinbefore defined) binder, the total weight of binder being within the range from 0.1% to 30% of the total weight of the composition, provided that, if the viscosity of the binder per se is not more than 20,000 centipoises at 25˚C then (a) the combined weight of binder is not more than 15% of the composition and (b) at least 10% by weight of the total discrete particles have a deformability (as hereinbefore defined) of at least 50%, and wherein the binder is capable of binding the composition together to form a self‒supporting room‒temperature‒flexible article when the composition is compressed under conditions which allow at least the first reactive component and the second reactive component to remain in particulate form.

2. A composition according to claim 1, wherein the binder per se is flowable under substantially solvent‒free processing conditions which do not significantly render flowable any reactive component particles.

3. A composition according to claim 1, wherein the total weight of binder is not more than 15%, preferably not more than 10% of the composition, more preferably not more than 5% of the composition, and is not less than 1%, preferably not less than 2% of the composition.

4. A composition according to claim 1, wherein the binder is flowable at 250˚C.

5. A composition according to claim 1, wherein the viscosity of the binder per se is not more than 20000, preferably not more than 15000, centipoises at 25˚C.

6. A composition according to claim 5, wherein the viscosity of the binder per se is not more than 10,000 centipoises, preferably not more than 5,000 centipoises, more preferably not more than 1,500 cen‒tipoises, at 25˚C.

7. A composition according to claim 1, wherein the viscosity of the binder per se is greater than 20,000 centipoises at 25˚C.

8. A composition according to claim 7, wherein the viscosity of the binder per se is greater than 35,000 centipoises at 25˚C.

9. A composition according to claim 7 or 8, wherein the total weight of binder is more than 15% and not more than 25% of the composition.

10. A composition according to claim 7 or 8, comprising substantially no particles of more than 50% deformability.

11. A composition according to claim 1, wherein the first reactive component is a thermoplastic epoxy compound.

12. A composition according to claim 11, wherein the second reactive component is a thermoplastic polyamide, a thermoplastic copolymer of an alkene with an ethylenically unsaturated ester of an alkanol and a carboxylic acid, or a thermoplastic copolymer of an alkene with an ethylenically unsaturated acid or nitrile.

13. A composition according to claim 1, wherein the second reactive component is an amide adduct of a solid epoxy resin.

14. A self−supporting heat−curable adhesive article comprising a composition according to claim 1, which has been rendered cohesive with at least the first reactive component and the second reactive component remaining in particulate form in the article.

15. An article according to claim 14, wherein the reactive component particles are bound together substantially only by the said binder.

16. An article according to claim 14 or 15 wherein at least some of the particles, preferably reactive component particles, have a deformability of at least 50% and been distorted by the process of rendering the composition cohesive.

17. An article according to claim 14, which is flexible preferably at room temperature to the extent that it can be wrapped without clearly observable cracking around a circular body of diameter 100 times, preferably 50 times, more preferably 25 times, the maximum thickness of the article in the sense which would lie perpendicular to the circular body surface when the article is wrapped once around it.

18. An article according to claim 17, which can be wrapped without clearly observable cracking around a circular body of diameter 10 times, preferably 5 times, the maximum thickness of the article in the sense which would lie perpendicular to the circular body surface when the article is wrapped once around it.

19. An article according to claim 17 or 18 having a substantially uniform cross−section in the sense which would lie parallel to the circular body surface when the article is wrapped around it and having a thickness of from 0.2 to 5, preferably 1 to 3, millimetres in the said perpendicular sense.

20. A method of manufacturing a composition according to claim 1, comprising dispersing the binder into a mass of particles of the first reactive component, and/or particles of the second reactive component under conditions under which the reactive component particles are substantially non−flowable and the binder is flowable to coat the individual particle surfaces.

21. A method according to claim 20, wherein the binder is dispersed into the particles under substantially solvent−free conditions.

22. A method according to claim 20, wherein the binder is applied to the particles of the first reactive component separately from the particles of the second component and/or is applied to the particles of

13

EP 0 191 649 B1

the second reactive component separately from the particles of the first reactive component, and the respective particles of the first and second reactive components are subsequently mixed together.

23. A method of manufacturing an article according to claim 14 comprising compressing the composition at a temperature below the softening point of the reactive components to render it cohesive.

24. A method according to claim 23, wherein the composition is compressed to render it cohesive in the substantial absence of solvent.

25. A method according to claim 23 or 24 wherein the composition is compressed to render it cohesive during extrusion, rolling or moulding to produce the article.

26. A composition according to any of claims 1 to 13 which has been cured.

27. An article according to claim 14 which has been cured.

28. A composition according to claim 1 or an article according to claim 14 carried on a dimensionally heat-recoverable article so as to lie, in use, between the recoverable article and an object about which the article is to be recovered in use.

**Patentansprüche**

1. Wärmehärtbare Zusammensetzung, die ein im wesentlichen nichtkohäsives Gemisch von im wesentlichen festen Teilchen aufweist, wobei das Gemisch aufweist: im wesentlichen feste Teilchen einer ersten reaktiven Komponente und gesonderte im wesentlichen feste Teilchen wenigstens einer zweiten reaktiven Komponente, die zur Reaktion mit der ersten Komponente fähig ist, um die Härtung zu bewirken, wenn die Zusammensetzung auf die Härtungstemperatur erwärmt wird, wobei wenigstens eine Mehrheit der Teilchen individuelle Anteile von kompatiblem (wie definiert) Bindemittel trägt, das Gesamtgewicht des Bindemittels in dem Bereich von 0,1 - 30 % des Gesamtgewichts der Zusammen - setzung liegt mit der Maßgabe, daß, wenn die Viskosität des Bindemittels für sich nicht mehr als 20.000 cp bei 25 ˚C ist, (a) das kombinierte Gewicht von Bindemittel nicht mehr als 15 % der Zusammenset - zung ist und (b) wenigstens 10 Gew. - % der gesamten diskreten Teilchen ein Formänderungsvermö - gen (wie definiert) von wenigstens 50 % hat, und wobei das Bindemittel die Zusammensetzung aneinander binden kann, um einen selbsttragenden, bei Raumtemperatur flexiblen Gegenstand zu formen, wenn die Zusammensetzung unter Bedingungen zusammengepreßt wird, die es wenigstens der ersten reaktiven Komponente und der zweiten reaktiven Komponente erlauben, in Teilchenform zu verbleiben.

2. Zusammensetzung nach Anspruch 1, wobei das Bindemittel für sich unter im wesentlichen lösungs - mittelfreien Verarbeitungsbedingungen, die keine Teilchen der reaktiven Komponenten in signifikanter Weise fließfähig machen, fließfähig ist.

3. Zusammensetzung nach Anspruch 1, wobei das Gesamtgewicht von Bindemittel nicht mehr als 15 %, bevorzugt nicht mehr als 10 % der Zusammensetzung, stärker bevorzugt nicht mehr als 5 % der Zusammensetzung, und nicht weniger als 1 %, bevorzugt nicht weniger als 2 % der Zusammensetzung beträgt.

4. Zusammensetzung nach Anspruch 1, wobei das Bindemittel bei 250 ˚C fließfähig ist.

5. Zusammensetzung nach Anspruch 1, wobei die Viskosität des Bindemittels für sich nicht mehr als 20.000, bevorzugt nicht mehr als 15.000 cp bei 25 ˚C beträgt.

6. Zusammensetzung nach Anspruch 5, wobei die Viskosität des Bindemittels für sich nicht mehr als 10.000 cp, bevorzugt nicht mehr als 5000 cp, stärker bevorzugt nicht mehr als 1500 cp bei 25 ˚C beträgt.

7. Zusammensetzung nach Anspruch 1, wobei die Viskosität des Bindemittels für sich höher als 20.000 cp bei 25 ˚C ist.

14

**8.** Zusammensetzung nach Anspruch 7, wobei die Viskosität des Bindemittels für sich höher als 35.000 cp bei 25 ˚C ist.

**9.** Zusammensetzung nach Anspruch 7 oder 8, wobei das Gesamtgewicht von Bindemittel mehr als 15 % und nicht mehr als 25 % der Zusammensetzung beträgt.

**10.** Zusammensetzung nach Anspruch 7 oder 8, die im wesentlichen keine Teilchen mit einem Formände – rungsvermögen von mehr als 50 % aufweist.

**11.** Zusammensetzung nach Anspruch 1, wobei die erste reaktive Komponente eine thermoplastische Epoxidverbindung ist.

**12.** Zusammensetzung nach Anspruch 11, wobei die zweite reaktive Komponente ein thermoplastisches Polyamid, ein thermoplastisches Copolymer eines Alkens mit einem ethylenisch ungesättigten Ester eines Alkanols und einer Carbonsäure oder ein thermoplastisches Copolymer eines Alkens mit einer ethylenisch ungesättigten Säure oder einem Nitril ist.

**13.** Zusammensetzung nach Anspruch 1, wobei die zweite reaktive Komponente ein Amidaddukt eines festen Epoxidharzes ist.

**14.** Selbsttragender wärmehärtbarer Klebstoff – Gegenstand, der eine Zusammensetzung nach Anspruch 1 aufweist, die kohäsiv gemacht ist, wobei wenigstens die erste reaktive Komponente und die zweite reaktive Komponente in dem Gegenstand in Teilchenform verbleiben.

**15.** Gegenstand nach Anspruch 14, wobei die Teilchen der reaktiven Komponenten im wesentlichen nur durch das Bindemittel aneinander gebunden sind.

**16.** Gegenstand nach Anspruch 14 oder 15, wobei wenigstens einige der Teilchen, bevorzugt reaktive Komponenten – Teilchen, ein Formänderungsvermögen von wenigstens 50 % haben und durch den Vorgang des Kohäsiv – Machens der Zusammensetzung verformt worden sind.

**17.** Gegenstand nach Anspruch 14, der bevorzugt bei Raumtemperatur in solchem Maß flexibel ist, daß er ohne deutlich sichtbare Rißbildung um einen kreisrunden Körper gewickelt werden kann, dessen Durchmesser der 100fachen, bevorzugt der 50fachen, stärker bevorzugt der 25fachen maximalen Dicke des Gegenstands in der Richtung entspricht, die zu der Oberfläche des kreisrunden Körpers senkrecht liegen würde, wenn der Gegenstand einmal darum herumgewickelt ist.

**18.** Gegenstand nach Anspruch 17, der ohne deutlich sichtbare Rißbildung um einen kreisrunden Körper gewickelt werden kann, dessen Durchmesser der zehnfachen, bevorzugt der fünffachen maximalen Dicke des Gegenstands in der Richtung entspricht, die zu der Oberfläche des kreisrunden Körpers senkrecht liegen würde, wenn der Gegenstand einmal darum herumgewickelt ist.

**19.** Gegenstand nach Anspruch 17 oder 18 mit einem im wesentlichen gleichförmigen Querschnitt in der Richtung, die zu der Oberfläche des kreisrunden Körpers parallel liegen würde, wenn der Gegenstand um ihn herumgewickelt ist, und mit einer Dicke von 0,2 – 5 mm, bevorzugt 1 – 3 mm in der genannten senkrechten Richtung.

**20.** Verfahren zur Herstellung einer Zusammensetzung nach Anspruch 1, das aufweist: Dispergieren des Bindemittels in einer Masse von Teilchen der ersten reaktiven Komponente und/oder Teilchen der zweiten reaktiven Komponente unter Bedingungen, unter denen die Teilchen der reaktiven Komponen – ten im wesentlichen nicht fließfähig sind und das Bindemittel fließfähig ist, um die Oberflächen der einzelnen Teilchen zu beschichten.

**21.** Verfahren nach Anspruch 20, wobei das Bindemittel in die Teilchen unter im wesentlichen lösungs – mittelfreien Bedingungen eindispergiert wird.

**22.** Verfahren nach Anspruch 20, wobei das Bindemittel auf die Teilchen der ersten reaktiven Komponente gesondert von den Teilchen der zweiten Komponente und/oder auf die Teilchen der zweiten reaktiven Komponente gesondert von den Teilchen der ersten reaktiven Komponente aufgebracht wird und die jeweiligen Teilchen der ersten und der zweiten reaktiven Komponente anschließend miteinander vermischt werden.

**23.** Verfahren zur Herstellung eines Gegenstands nach Anspruch 14, wobei die Zusammensetzung bei einer Temperatur unter dem Erweichungspunkt der reaktiven Komponenten mit Druck beaufschlagt wird, um sie kohäsiv zu machen.

**24.** Verfahren nach Anspruch 23, wobei die Zusammensetzung im wesentlichen in Abwesenheit von Lösungsmittel mit Druck beaufschlagt wird, um sie kohäsiv zu machen.

**25.** Verfahren nach Anspruch 23 oder 24, wobei die Zusammensetzung während des Extrudierens, Walzens oder Formens zum Herstellen des Gegenstands mit Druck beaufschlagt wird, um sie kohäsiv zu machen.

**26.** Zusammensetzung nach einem der Ansprüche 1 – 13, die gehärtet ist.

**27.** Gegenstand nach Anspruch 14, der gehärtet ist.

**28.** Zusammensetzung nach Anspruch 1 oder Gegenstand nach Anspruch 14, die/der auf einem dimen – sionsmäßig wärmerückstellbaren Gegenstand getragen ist, so daß er im Gebrauch zwischen dem rückstellbaren Gegenstand und einem Objekt liegt, um den herum der Gegenstand im Gebrauch rückzustellen ist.

**Revendications**

**1.** Composition thermodurcissable comprenant un mélange essentiellement non cohésif de particules pratiquement solides, mélange qui comprend des particules pratiquement solides d'un premier consti – tuant réactif et des particules pratiquement solides distinctes d'au moins un second constituant réactif capable de réagir avec le premier constituant pour provoquer le durcissement lorsque la composition est chauffée à la température de durcissement, dans laquelle au moins une portion dominante des particules porte des portions distinctes d'un liant compatible (répondant à la définition précitée), le poids total du liant étant compris dans l'intervalle de 0,1 % à 30 % du poids total de la composition, sous réserve que, si la viscosité du liant proprement dit est non supérieure à 20 000 centipoises à 25°C, alors (a) le poids total du liant soit non supérieur à 15 % de la composition et (b) une quantité d'au moins 10 % en poids des particules distinctes totales possède une capacité de déformation (telle qu'elle est définie précédemment) d'au moins 50 %, et dans laquelle le liant est capable d'assurer la liaison de la composition pour la formation d'un article autoporteur, flexible à température ambiante, lorsque la composition est comprimée dans des conditions qui permettent au moins au premier constituant réactif et au second constituant réactif de rester sous forme de particules.

**2.** Composition suivant la revendication 1, dans laquelle le liant proprement dit est apte à l'écoulement dans des conditions de traitement correspondant à une absence pratiquement totale de solvant, qui ne rendent pas notablement aptes à l'écoulement n'importe quelles particules des constituants réactifs.

**3.** Composition suivant la revendication 1, dans laquelle le poids total du liant est non supérieur à 15 %, avantageusement non supérieur à 10 % de la composition, de préférence non supérieur à 5 % de la composition, et est non inférieur à 1 %, de préférence non inférieur à 2 % de la composition.

**4.** Composition suivant la revendication 1, dans laquelle le liant est apte à l'écoulement à 250°C.

**5.** Composition suivant la revendication 1, dans laquelle la viscosité du liant proprement dit est non supérieure à 20 000, de préférence non supérieure à 15 000, centipoises à 25°C.

**6.** Composition suivant la revendication 5, dans laquelle la viscosité du liant proprement dit est non supérieure à 10 000 centipoises, avantageusement non supérieure à 5000 centipoises, de préférence non supérieure à 1500 centipoises, à 25°C.

**7.** Composition suivant la revendication 1, dans laquelle la viscosité du liant proprement dit est supérieure à 20 000 centipoises à 25°C.

**8.** Composition suivant la revendication 7, dans laquelle la viscosité du liant proprement dit est supérieure à 35 000 centipoises à 25°C.

**9.** Composition suivant la revendication 7 ou 8, dans laquelle le poids total du liant est supérieur à 15 % et non supérieur à 25 % de la composition.

**10.** Composition suivant la revendication 7 ou 8, ne comprenant pratiquement aucune particule ayant une capacité de déformation supérieure à 50 %.

**11.** Composition suivant la revendication 1, dans laquelle le premier constituant réactif est un composé époxy thermoplastique.

**12.** Composition suivant la revendication 11, dans laquelle le second constituant réactif est un polyamide thermoplastique, un copolymère thermoplastique d'un alcène avec un ester à insaturation éthylénique d'un alcanol et d'un acide carboxylique, ou un copolymère thermoplastique d'un alcène avec un acide ou nitrile à insaturation éthylénique.

**13.** Composition suivant la revendication 1, dans laquelle le second constituant réactif est un produit d'addition d'une amide sur une résine époxy solide.

**14.** Article adhésif thermodurcissable autoporteur comprenant une composition suivant la revendication 1, qui a été rendu cohésif avec au moins le premier constituant réactif et le second constituant réactif restant sous forme de particules dans l'article.

**15.** Article suivant la revendication 14, dans lequel les particules de constituants réactifs sont liées les unes aux autres pratiquement seulement par le liant.

**16.** Article suivant la revendication 14 ou 15, dans lequel au moins certaines des particules, de préférence les particules de constituants réactifs, possèdent une capacité de déformation d'au moins 50 % et ont été déformées par le procédé destiné à rendre la composition cohésive.

**17.** Article suivant la revendication 14, qui est flexible de préférence à température ambiante à un degré tel qu'il puisse être enroulé sans fissuration nettement observable autour d'un corps circulaire ayant un diamètre égal à 100 fois, avantageusement 50 fois, de préférence 25 fois, l'épaisseur maximale de l'article dans la direction s'étendant perpendiculairement à la surface du corps circulaire lorsque l'article est enroulé une fois autour de ce corps.

**18.** Article suivant la revendication 17, qui peut être enroulé sans fissuration nettement observable autour d'un corps circulaire ayant un diamètre égal à 10 fois, de préférence 5 fois, l'épaisseur maximale de l'article dans la direction s'étendant perpendiculairement à la surface du corps circulaire lorsque l'article est enroulé une fois autour de ce corps.

**19.** Article suivant la revendication 17 ou 18, ayant une section transversale pratiquement uniforme dans la direction s'étendant parallèlement à la surface du corps circulaire lorsque l'article est enroulé autour de ce corps, et ayant une épaisseur de 0,2 à 5, de préférence de 1 à 3, millimètres dans ladite direction perpendiculaire.

**20.** Procédé de production d'une composition suivant la revendication 1, consistant à disperser le liant dans une masse de particules du premier constituant réactif et/ou de particules du second constituant réactif dans des conditions dans lesquelles les particules de constituants réactifs sont pratiquement inaptes à l'écoulement et le liant est apte à l'écoulement pour revêtir les surfaces des particules distinctes.

**21.** Procédé suivant la revendication 20, dans lequel le liant est dispersé dans les particules en l'absence pratiquement totale de solvant.

17

**22.** Procédé suivant la revendication 20, dans lequel le liant est appliqué aux particules du premier constituant réactif séparément des particules du second constituant et/ou est appliqué aux particules du second constituant réactif séparément des particules du premier constituant réactif, et les particules respectives des premier et second constituants réactifs sont mélangées ultérieurement les unes aux autres.

**23.** Procédé de production d'un article suivant la revendication 14, consistant à comprimer la composition à une température inférieure au point de ramollissement des constituants réactifs pour rendre cette composition cohésive.

**24.** Procédé suivant la revendication 23, dans lequel la composition est comprimée pour la rendre cohésive en l'absence pratiquement totale de solvant.

**25.** Procédé suivant la revendication 23 ou 24, dans lequel la composition est comprimée pour la rendre cohésive au cours d'une extrusion, d'un laminage ou d'un moulage pour la production de l'article.

**26.** Composition suivant l'une quelconque des revendications 1 à 13, qui a été durcie.

**27.** Article suivant la revendication 14, qui a été durci.

**28.** Composition suivant la revendication 1 ou article suivant la revendication 14 porté par un article doué de reprise dimensionnelle à chaud de manière à se trouver, lors de l'utilisation, entre l'article doué de reprise dimensionnelle et un objet autour duquel l'article doit être soumis à une reprise dimensionnelle lors de l'utilisation.